# EUROPEAN PATENT APPLICATION

(11) **EP 2 366 535 A2**
(43) Date of publication of application: **21.09.2011**
(21) Application number: 11158623.6
(22) Date of filing: 17.03.2011
(51) Int. Cl.: B29D 11/00

(54) **Lens and lens array and manufacturing method thereof**

(30) Priority: 19.03.2010 JP 2010065214
(71) Applicant: Fujifilm Corporation, Minato-ku Tokyo (JP)
(72) Inventor: Sakaki, Takeshi, Saitama (JP); Fujiwara, Takayuki, Saitama (JP)
(74) Representative: Vierheilig, Achim

(57) **Abstract**

A lens (3) is formed from a heat resistant resin and includes a diaphragm (31) integrally provided on a surface of the lens. The diaphragm is a coating layer formed as a result of a heat resistant, light blocking resin being applied over the surface.

## Description

### BACKGROUND

### 1. Technical Field

The present invention relates to a lens and a lens array and a manufacturing method thereof.

### 2. Related Art

An onboard imaging unit in an electronic device, such as a portable phone, generally has a solid state imaging element, such as a CCD (Charge Coupled Device) image sensor and a CMOS (Complementary Metal Oxide Semiconductor) image sensor, and an optical system that forms a subject image on the solid state imaging element. The optical system includes a built-in diaphragm for regulating brightness of an image.

Reflow treatment is usually adopted for mounting an imaging unit on a circuit board of an electronic device. Reflow treatment refers to a technique for previously placing solder at a position on a circuit board where an electronic component is to be connected, placing the electronic component at the position, heating the thus-placed electronic component, and cooling the solder after having fused the solder, thereby soldering the electronic component.

Patent Document 1 (JP-B-3926380) includes a description about an optical system that includes a diaphragm that is provided aside from a lens and that is placed in alignment with an optical axis. Since the diaphragm is exposed to a high temperature environment through reflow processing, the diaphragm is usually formed from metal, like stainless steel.

Patent Document 2 (JP-A-2009-301061) provides a description about an optical system built from a lens integrally including a diaphragm. The lens is produced by depositing metal on a surface of a transparent substrate made of glass or a resin, forming a diaphragm from the deposited metal film, and stacking a lens member formed from a resin on the diaphragm. The diaphragm is provided in a lens body made up of the transparent substrate and the lens member.

The configuration described in connection with Patent Document 2 obviates a necessity for positioning the diaphragm during assembly of an imaging unit, whereby productivity is enhanced. However, a great difference usually exists between a coefficient of linear expansion of the metal making up the diaphragm and a coefficient of linear expansion of the resin making up the lens body. For this reason, a difference occurs between the amount of thermal expansion of the diaphragm and the amount of thermal expansion of the lens body caused by a temperature change incidental to reflow treatment, or the like, which in turn causes distortion. The distortion may induce deformation of the lens body and the diaphragm and separation of the lens body from the diaphragm, which deteriorates optical performance of the lens. In addition, forming a deposited metal film used for making the diaphragm incurs a cost.

### SUMMARY

The present invention has been conceived in light of the circumstance and aims at preventing deterioration of optical performance, which would otherwise be caused by a temperature change, in connection with a lens integrally having a diaphragm and a lens array that is an aggregation of the lenses.
(1) According to an aspect of the invention, a lens is formed from a heat resistant resin and includes a diaphragm integrally provided on a surface of the lens. The diaphragm is a coating layer formed as a result of a heat resistant, light blocking resin being applied over the surface.
(2) According to another aspect of the invention, a lens array includes the plurality of foregoing lenses. The plurality of lenses are arranged in a one-dimensional or two-dimensional pattern and interconnected.
(3) According to another aspect of the invention, a method for manufacturing a lens array includes: forming a lens array from a heat resistant resin, the lens array including a plurality of lenses arranged in a one-dimensional or two-dimensional pattern and a substrate block connecting the plurality of lenses together; and coating a surface of the lens array with a heat resistant, light blocking resin, thereby forming a light blocking layer that provides an exposure of at least portions of the respective lenses.
(4) According to another aspect of the invention, a method for manufacturing a lens includes: cutting the substrate block of the lens array manufactured under the foregoing method, to separate the lens array into respective lenses.

According to the configurations described above, both the lens and the diaphragm are formed from a heat resistant resin. A difference between an amount of thermal expansion of the lens and an amount of thermal expansion of the diaphragm caused by a temperature change incidental to reflow treatment, or the like, becomes smaller when compared with a case where either the lens or the diaphragm is formed from a resin and where the remaining is formed from metal, so that occurrence of distortion is inhibited. Therefore, deterioration of optical performance due to a temperature change occurring during reflow treatment, or the like, can be inhibited. The diaphragm is a coating layer that is made by applying a light blocking resin over a surface of a lens block and hence easy to manufacture the lens.

### BRIEF DESCRIPTION OF THE DRAWINGS

Fig. 1 is a view showing an example imaging unit for explaining an embodiment of the present invention;
Fig. 2 is a view showing an example lens array for explaining the embodiment of the present invention;
Fig. 3 is a cross sectional view taken along line III-III shown in Fig. 2;
Fig. 4 is a view showing an example molding die that produces a lens array body of the lens array shown in Fig. 2;
Figs. 5A to 5C are views showing an example step of forming the lens array body using the molding die shown in Fig. 4;
Fig. 6 is a view showing an example coating machine that forms a light blocking layer of the lens array shown in Fig. 2;
Figs. 7A and 7B are views showing an example step of forming the light blocking layer by use of the coating machine shown in Fig. 6;
Figs. 8A and 8B are views showing an example method for manufacturing the imaging unit shown in Fig, 1;
Figs. 9A to 9C are views showing an example modification of the method for manufacturing the imaging unit shown in Figs. 8A and 8B; and
Fig. 10 is a view showing another example method for manufacturing the imaging unit shown in Fig. 1.

### DETAILED DESCRIPTION

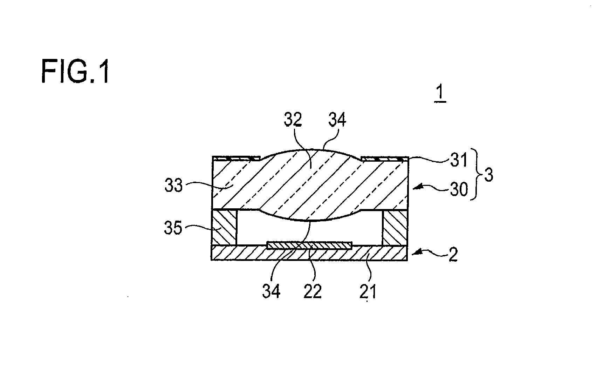

Fig. 1 shows an example imaging unit.

The imaging unit 1 shown in Fig. 1 has a sensor 2 including a solid state imaging element 22 and a lens 3.

The sensor 2 has a wafer piece 21. The wafer piece 21 is formed from; for instance, a semiconductor like silicon, and a solid state imaging element 22 is placed at a substantial center of the wafer piece 21. The solid state imaging element 22 is; for instance, a CCD image sensor and a CMOS image sensor. The wafer piece 21 is repeatedly subjected to processing pertaining to a well-known film formation step, a photolithography step, an etching step, an impurity doping step, and the like, whereby a light receiving region, electrodes, an insulation film, a line, and the like, are formed on the wafer piece 21.

The lens 3 has a lens body 30 and a diaphragm 31. The lens body 30 is made up of a lens block 32 and a flange block 33. The lens block 32 and the flange block 33 are integrally formed from a heat resistant, translucent resin. The lens block 32 is a block that performs optical performance and that causes convergence or divergence of a bundle of penetrating rays. An optical surface 34 is formed over each of front and back sides of the lens block 32. In the illustrated embodiment, each of the optical surfaces 34 is a convex spherical surface. However, according to applications, it is possible to adopt various combinations of a convex spherical surface, a concave spherical surface, an aspherical surface, and a planar surface. The flange 33 extends from an outer circumference of the lens block 32 the form of a flange, thereby surrounding the lens block 32.

The diaphragm 31 is provided on one side of the lens body 30 (i.e., an upper side in the illustrated embodiment which is hereunder called an "upper surface"). The diaphragm 31 is formed from a coating layer that is made by coating the upper surface of the lens body 30 with a heat resistant, light blocking resin, thereby preventing a portion of the bundle of rays entered the lens 3 from passing through the lens 3. In the illustrated embodiment, the diaphragm 31 acts as a so-called stray diaphragm that provides an exposure of the entirety of the optical surface 34 of the lens block 32 on the upper surface of the lens body 30 and that covers the flange block 33, to thus block stray light. In some cases, the diaphragm 31 covers a portion of the optical surface 34 of the lens block 32 (an outer circumference). In such a case, the diaphragm 31 is a so-called aperture diaphragm that defines an effective diameter of the lens 3.

The lens 3 is stacked on the sensor 2 with a spacer 35 sandwiched between the flange block 33 of the lens body 30 and the wafer piece 21 of the sensor 2. The lens 3 generates a subject image on a light receiving region of the solid state imaging element 22. In the illustrated example, the lens 3 stacked on the sensor 2 is one. However, there is a case where a plurality of lenses 3 are stacked on the sensor 2.

The spacer 35 is not restricted to any specific shape, so long as the lens 3 becomes stable on the sensor 2. Preferably, the spacer 35 assumes the shape of a frame that encloses the solid state imaging element 22. If the spacer 35 is given the shape of a frame, space existing between the sensor 2 and the lens 3 can be isolated from the outside. Intrusion of an extraneous matter, like dust, into the space between the sensor 2 and the lens 3 is blocked, thereby making it possible to prevent the extraneous matters from attaching to the solid state imaging element 22 and the optical surface 34. Further, in this case, if the spacer 35 is made opaque, light unnecessary for image formation can be prevented from entering the solid state imaging element 22 from the space between the sensor 2 and the lens 3.

The imaging unit 1 configured as mentioned above is usually mounted on a circuit board of an electronic device by means of reflow treatment. Specifically, paste-like solder is previously printed at a location on a circuit board where the imaging unit 1 is to be mounted, and the imaging unit 1 is mounted at that position. The circuit board including the imaging unit 1 is subjected to exposure of infrared radiation and heat treatment, like hot blast, whereby the solder is fused, so that the imaging unit 1 is mounted on the circuit board.

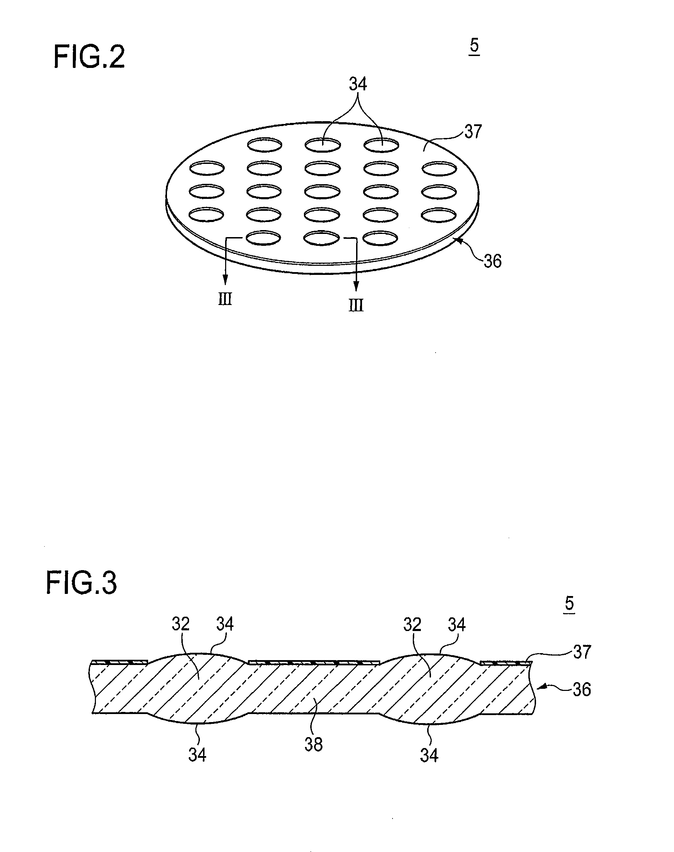

Figs. 2 and 3 show an example lens array.

The lens array 5 shown in Figs. 2 and 3 has a lens array body 36 and a light blocking layer 37. The lens array body 36 includes a plurality of lens blocks 32 and a substrate block 38.

In the illustrated embodiment, the plurality of lens blocks 32 are arranged in a matrix pattern, and the substrate block 38 fills space among the lens blocks 32, thereby interlinking the lens blocks 32. The plurality of lens blocks 32 and the substrate block 38 are integrally formed from a heat resistant, translucent resin.

The substrate block 38 assumes the shape of a wafer (a disc shape), and typical diameters of the substrate block include 6 inches, 8 inches, and 12 inches. Thousands of lens blocks 32 are typically arranged in the substrate block 38 having any of the above sizes. The substrate block 38 is not limited to the shape of a wafer but may also assume a rectangular shape. Moreover, the plurality of lens blocks 32 is not limited to a matrix pattern but may also assume; for instance, a radial pattern, a concentric annular pattern, and another two-dimensional pattern. Alternatively, the plurality of lens blocks 32 may also assume a one-dimensional pattern.

The light blocking layer 37 is placed on one surface of the lens array body 36 (i.e., an upper side in the illustrated embodiment that is hereunder called an "upper surface"). The light blocking layer 37 is a coating layer made by applying a heat resistant, light blocking resin over the upper surface of the lens array body 36. In the illustrated embodiment, the light blocking layer 37 provides an exposure of the entirety of the optical surface 34 of each of the lens blocks 32 on the upper surface of the lens array body 36 and covers the substrate block 38. In some cases, the light blocking layer 37 covers a portion of the optical surface 34 of each of the lens blocks 32 (an outer circumference).

The lens 3 (see Fig. 1) is obtained as a result of the substrate block 38 of the lens array 5 being cut and the lens array 5 being separated in such a way that each lens array includes one lens block 32. Put another way, the lens array 5 is an aggregation of the lenses 3. A small piece obtained as a result of separation of the substrate block 38 becomes the flange block 33 of the individual lens 3. A small piece obtained as a result of separation of the light blocking layer 37 becomes the diaphragm 31 of the individual lens 3.

For instance, an energy curable resin composition can be used as a resin making up the lens array body 36. The energy curable resin composition may be any one of resin compositions; for instance, a resin composition that becomes cured by heat, such as a silicone resin, an epoxy resin, and a phenol resin, and a resin composition that becomes cured upon exposure to active energy radiation (e.g., UV radiation), like an epoxy resin and an acryl resin.

The resin composition making up the lens array body 36 preferably has appropriate flowability before the molding from the viewpoint of molding characteristics such as a characteristic to transfer the shape of a molding die. Specifically, a resin composition that is in the form of a liquid at room temperature and has viscosity of approximately 1000 through 50000 mPa·s is preferably used.

On the other hand, the resin composition making up the lens array body 36 preferably attains, when cured, heat resistance sufficient for avoiding heat distortion even through reflow processing. From this point of view, a cured substance of the resin composition has a glass transition temperature of preferably 250°C or more and more preferably 300°C or more. In order to provide a resin composition with such high heat resistance, it is necessary to constrain mobility on the level of molecules, and examples of effective methods to be employed for this purpose are as follows: (1) A method in which the crosslink density per unit volume is increased; (2) a method in which a resin with a rigid ring system (i.e., a resin having an alicyclic system such as cyclohexane, norbornane or tetracyclododecane, an aromatic ring system such as benzene or naphthalene, a cardo system such as 9,9'-biphenylfluorene or a spiro system such as spirobiindane, and more specifically, a resin disclosed in, for instance, JP-A-9-137043, JP-A-10-67970, JP-A-2003-55316, JP-A-2007-334018 or JP-A-2007-238883) is used; and (3) a method in which a substance with a high Tg such as inorganic particulates is homogeneously dispersed (as described in, for instance, JP-A-5-209027 or JP-A-10-298265). A plurality of such methods may be employed in combination, and each method is preferably adjusted as far as other characteristics such as the flowability, a rate of shrinkage and a refractive index characteristic are not spoiled.

From the viewpoint of accuracy in transferring a shape, the resin composition making up the lens array body 36 preferably exhibits a small rate of volume shrinkage in the curing reaction. The rate of shrinkage of the resin composition caused in the curing is preferably 10% or less, more preferably 5% or less and particularly preferably 3% or less. Examples of the resin composition with a small rate of shrinkage caused in the curing are as follows: (1) A resin composition including a polymeric curing agent (such as a prepolymer) (specific examples of which are described in, for instance, JP-A- 2001-19740, JP-A-2004-302293 and JP-A-2007-211247; a number average molecular weight of the polymeric curing agent is preferably 200 through 100,000, more preferably 500 through 50,000 and particularly preferably 1,000 through 20,000, and a value calculated by dividing the number average molecular weight of the curing agent by the number of curing reactive groups thereof is preferably 50 through 10,000, more preferably 100 through 5,000 and particularly preferably 200 through 3,000); (2) a resin composition including a nonreactive substance (such as organic/inorganic particulates or a nonreactive resin) (specific examples of which are described in JP-A-6-298883, JP-A-2001-247793 and JP-A-2006-225434); (3) a resin composition including a low profile crosslinking reactive group (for instance, a ring opening polymerizable group (such as an epoxy group (described in, for instance, JP-A-2004-210932), an oxetanyl group (described in, for instance, JP-A-8-134405), an episulfide group (described in, for instance, JP-A-2002-105110) and a cyclic carbonate group (described in, for instance, JP-A-7-62065)), a thiol/ene curing group (described in, for instance, JP-A-2003-20334) or a hydrosilylation curing group (described in, for instance, JP-A-2005-15666)); (4) a resin composition including a rigid skeleton resin (such as fluorene, adamantane or isophorone) (described in, for instance, JP-A-9-137043); (5) a resin composition including two kinds of monomers having different polymerizable groups and forming an interpenetrating network structure (i.e., so-called IPN structure) (described in, for instance, JP-A-2006-131868); and (6) a resin composition including an expansible substance (described in, for instance, JP-A-2004-2719 and JP-A-2008-238417), and any of these resin compositions may be suitably used in the present invention. Furthermore, from the viewpoint of optimization of physical properties, some of the aforementioned compositions with a small rate of shrinkage caused in the curing are preferably combined for use (for instance, a resin composition including the prepolymer having a ring opening polymerizable group and the particulates is used).

Furthermore, a mixture of different resins respectively having at least two kinds of, namely, larger and smaller, Abbe numbers are preferably used as the resin composition making up the lens array body 36. A resin having a larger Abbe number has an Abbe number (vd) of preferably 50 or more, more preferably 55 or more and particularly preferably 60 or more. The refractive index (nd) of such a resin is preferably 1.52 or more, more preferably 1.55 or more and particularly preferably 1.57 or more. As such a resin, an aliphatic resin is preferably used, and a resin of an alicyclic system (i.e., a resin having a ring system such as cyclohexane, norbornane, adamantane, tricyclodecane or tetracyclododecane, specific examples of which are described in, for instance, JP-A-10-152551, JP-A-2002-212500, JP-A-2003-20334, JP-A-2004-210932, JP-A-2006-199790, JP-A-2007-2144, JP-A-2007-284650 and JP-A-2008-105999) is particularly preferred. A resin having a smaller Abbe number has an Abbe number (vd) of preferably 30 or less, more preferably 25 or less and particularly preferably 20 or less. The refractive index (nd) of such a resin is preferably 1.60 or more, more preferably 1.63 or more and particularly preferably 1.65 or more. As such a resin, a resin of an aromatic system is preferably used, and for instance, a resin having a system of 9,9'-diarylfluorene, naphthalene, benzothiazole, benzotriazole or the like (specific examples of which are described in, for instance, JP-A-60-38411, JP-A-10-67977, JP-A-2002-47335, JP-A-2003-238884, JP-A-2004-83855, JP-A-2005-325331 and JP-A-2007-238883, WO-A-2006/095610 and JP-B-2537540) is preferably used.

For the purpose of increasing the refractive index or adjusting the Abbe number, the resin composition making up the lens array body 36 preferably includes inorganic particulates dispersed in a matrix. Examples of the inorganic particulates are oxide particulates, sulfide particulates, selenide particulates and telluride particulates. More specific examples are particulates of zirconium oxide, titanium oxide, zinc oxide, tin oxide, niobium oxide, cerium oxide, aluminum oxide, lanthanum oxide, yttrium oxide, zinc sulfide and the like. In particular, in the resin having a larger Abbe number, particulates of lanthanum oxide, aluminum oxide, zirconium oxide or the like are preferably dispersed, and in the resin having a lower Abbe number, particulates of titanium oxide, tin oxide, zirconium oxide or the like are preferably dispersed. One kind of these inorganic particulates may be singly used or two or more kinds of them may be used together. Alternatively, particulates of a composite including a plurality of components may be used. Furthermore, for various purposes of reducing photocatalytic activity, reducing water absorption and the like, the inorganic particulates may be doped with a different kind of metal, coated with a different metal oxide such as silica or alumina on their surface layers, or subjected to surface modification with a silane coupling agent, a titanate coupling agent, an organic acid (such as a carboxylic acid, a sulfonic acid, a phosphoric acid or a phosphonic acid) or a dispersing agent having an organic acid group. The number average primary particle size of the inorganic particulates may be generally approximately 1 nm through 1000 nm, and when it is too small, the properties of the substance may be changed, and when it is too large, the influence of Rayleigh scattering may be largely exhibited, and therefore, the number average primary particle size is preferably 1 nm through 15 nm, more preferably 2 nm through 10 nm and particularly preferably 3 nm through 7 nm. Moreover, the particle size distribution of the inorganic particulates is preferably as small as possible. In this manner, monodisperse particulates may be variously defined, and for instance, a numerically specified range described in JP-A-2006-160992 corresponds to a preferable particle size distribution. At this point, the aforementioned number average primary particle size may be measured with, for instance, an X-ray diffractometer (XRD), a transmission electron microscope (TEM) or the like. The refractive index of the inorganic particulates at 22°C and a wavelength of 589 nm is preferably 1.90 through 3.00, more preferably 1.90 through 2.70 and particularly preferably 2.00 through 2.70. The content of the inorganic particulates in the resin is preferably 5 mass% or more, more preferably 10 through 70 mass% and particularly preferably 30 through 60 mass% from the viewpoint of transparency and improvement in the refractive index.

In order to homogeneously disperse the particulates in the resin composition, the particulates are dispersed preferably by appropriately using, for instance, a dispersing agent including a functional group with reactivity with a resin monomer forming the matrix (described in, for instance, an embodiment of JP-A-2007-238884), a block copolymer including a hydrophobic chain segment and a hydrophilic chain segment (described in, for instance, JP-A-2007-211164), a resin having, in a terminal or a side chain of a high polymer molecule, a functional group capable of forming an arbitrary chemical bond with the inorganic particulate (described in, for instance, JP-A-2007-238929 and JP-A-2007-238930) or the like.

Furthermore, the resin composition making up the lens array body 36 may appropriately include a known releasing agent such as a silicon-based, a fluorine-based or a long-chain alkyl group-containing compound or an additive such as an antioxidant like hindered phenol or the like.

The resin composition making up the lens array body 36 can be mixed with a curing catalyst or an initiator, as required. Specifically, there can be mentioned a compound that promotes a curing reaction (radical polymerization or ion polymerization) by means of action of heat or active energy radiation, such as that described in connection with; for instance, JP-A-2005-92099 (paragraph numbers [0063] to [0070]). A quantity of curing reaction promoter varies according to a difference in catalyst type and initiator type or a difference in location of a cure reactive area and hence cannot be specified unconditionally. In general, a preferred amount of curing reaction promoter is preferably 0.1 to 15 mass percentage and, more preferably, 0.5 to 5 mass percentage, with respect to all solid contents of a curing reaction resin composition.

The resin composition making up the lens array body 36 can be manufactured by means of blending the composition mentioned above, as required. On this occasion, when another composition can be dissolved into a liquid low molecular monomer (a reactive diluent), or the like, it is not necessary to add solvent additionally. However, when the above does not hold true for a case, a curable resin composition can be manufactured by dissolving the respective constituent components by use of a solvent. A solvent that can be used as the curable resin composition is not restricted to any specific solvent and can be selected appropriately, so long as the composition does not form a precipitate and is dissolved or dispersed uniformly. Specifically, there can be mentioned; for instance, ketones (e.g., acetone, methyl ethyl ketone, and methyl isobutyl ketone), esters (e.g., ethyl acetate and butyl acetate), ethers (e.g., tetrahydrofuran and 1,4-dioxane), alcohols (e.g., methanol, ethanol, isopropyl alcohol, butanol, and ethylene glycol), aromatic hydrocarbons (e.g., toluene and xylene), water, and the like. When the curable composition includes a solvent, it is preferable to perform mold shape transfer operation after drying of the solvent.

A resin that is used for forming the lens array body 36 and that is resultant from dispersing a black pigment, such as carbon black, into an energy curable resin composition serving as a base material can also be used as a resin used for forming the light blocking layer 37. Both the lens array body 36 and the light blocking layer 37 are formed from a resin. A difference between the amount of thermal expansion of the lens array body 36 and the amount of thermal expansion of the light blocking layer 37 caused by a temperature change incidental to reflow treatment, or the like, is reduced when compared with an amount of thermal expansion occurring when either the lens array body or the light blocking layer is formed from a resin and when the other is formed from metal. Thus, occurrence of distortion is inhibited.

A difference between the coefficient of linear expansion of the resin making up the lens array body 36 and the coefficient of linear expansion of the resin making up the light blocking layer 37 is 1 x 10⁻⁵/°C or less. Accordingly, a resin that includes the same resin as that making up the lens array body 36 as a base material and that becomes opaque as a result of a heat resistant black pigment, such as carbon black, being dispersed into the base material can preferably be used as a resin making up the light blocking layer 37. As a result, a coefficient of linear expansion of a resin making up the lens array body 36 and a coefficient of linear expansion of a resin making up the light blocking layer 37 thereby become substantially equal to each other.

An example method for manufacturing the lens array shown in Fig. 2 is hereunder described.

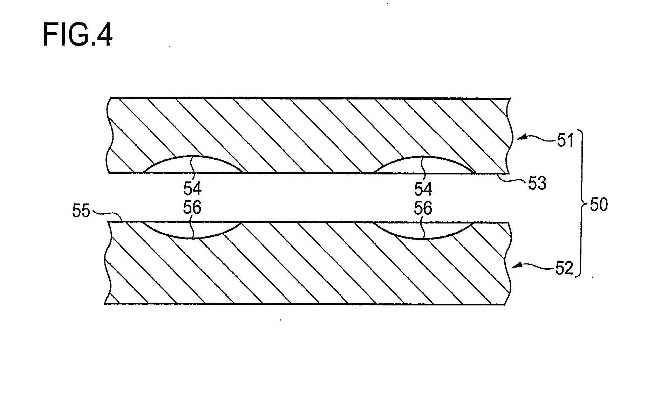

Fig. 4 shows an example molding die used for producing a lens array body of the lens array shown in Fig. 2.

A molding die 50 shown in Fig. 4 includes an upper die 51 and a lower die 52.

A lens mold portion 54 assuming an inverted geometry of one optical surface 34 of the lens block 32 is provided in numbers within a mold surface 53 of the upper die 51 and in alignment with the plurality of lens blocks 32 arranged in the lens array body 36. A lens mold portion 56 assuming an inverted geometry of the other optical surface 34 of the lens block 32 is provided in numbers within a mold surface 55 of the lower die 52 and in alignment with the plurality of lens blocks 32 arranged in the lens array body 36.

When the energy curable resin composition is used as a resin for forming the lens array main body 36, a material for the upper die 51 and the lower die 52 is selected, as appropriate, according to the resin composition. Specifically, when a heat curable resin is used as a resin composition, a metallic material exhibiting superior thermal conductivity; for instance, nickel, or a material that permits transmission of infrared radiation, like glass, is used as a material for the dies. When a UV curable resin material is used as a resin material, a material that permits transmission of UV radiation; for instance, glass, is used as a material for the dies.

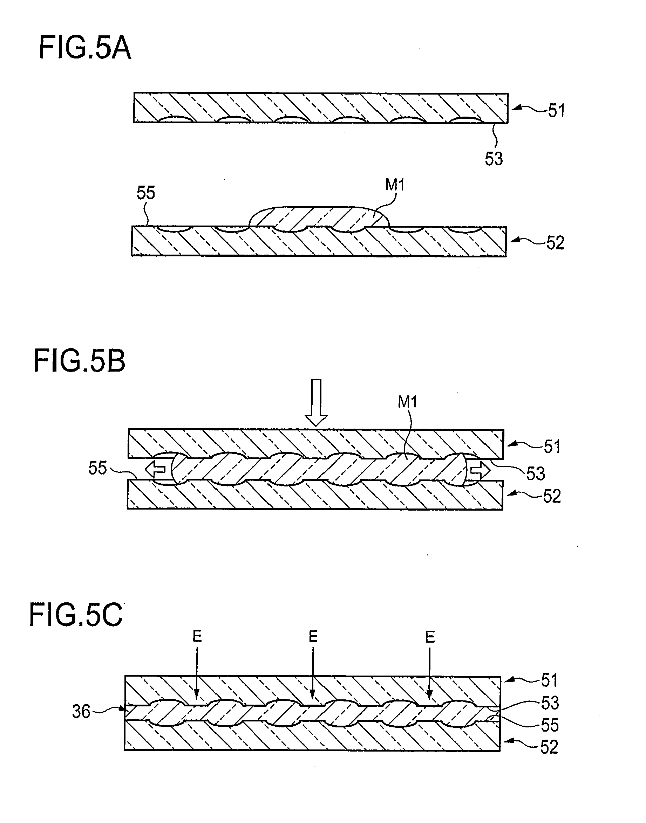

Figs. 5A to 5C show an example step of forming the lens array body using the molding dies shown in Fig. 4.

First, an amount of resin M1 required to form the lens array body 36 is fed over the mold surface 55 of the lower die 52 (Fig. 5A).

Next, the upper die 51 is lowered. With the progress of lowering action of the upper die 51, the resin M1 is pressed between the mold surface 53 of the upper die 51 and the mold surface 55 of the lower die 52. The resin spreads into a space between the mold surfaces 53 and 55 while being deformed by the mold surfaces 53 and 55 (Fig. 5B).

In a state in which the molding die 50 is closed with the upper die 51 fully lowered, the space between the mold surface 53 of the upper die 51 and the mold surface 55 of the lower die 52 is filled with the resin M1. In this state, energy E for curing purpose is applied to the resin, as needed, to thus cure the resin M1. The lens array body 36 is thereby formed (Fig. 5C).

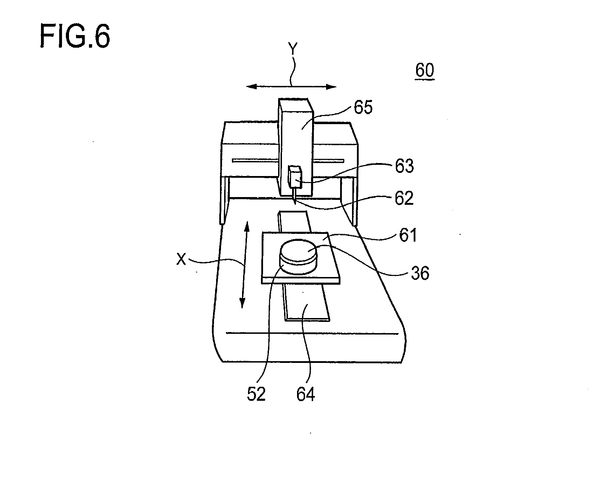

Fig. 6 shows an example coating machine for forming a light blocking layer of the lens array shown in Fig. 2.

As shown in Fig. 6, a coating machine 60 has a stage 61, a needle 62, and a syringe 63. The lens array body 36 is held by the lower die 52 of the molding die 50 with its upper surface exposed is placed on an upper surface of the stage 61. The stage 61 is moved by drive means 64 in a direction of the X axis parallel to the upper surface.

The needle 62 is placed at an elevated position above the stage 61 and actuated by drive means 65 in a direction of the Y axis that is parallel to the upper surface of the stage 61 and that is orthogonal to the X axis. The syringe 63 feeds resin used for forming the light blocking layer 37 to the needle 62. By means of actuation of the stage 61 in the direction of the X axis and actuation of the needle 62 in the direction of the Y axis, the needle 62 performs scanning of an upper surface of the lens array body 36 placed on the upper surface of the stage 61. In synchronism with scanning action, the syringe 63 feeds a resin to the needle 62. The resin ejected from the needle 62 is applied over the upper surface of the lens array body 36.

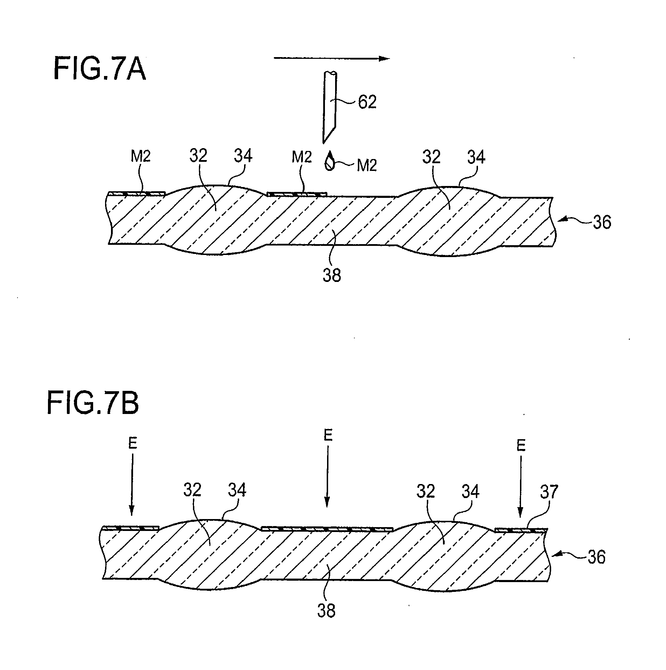

Figs. 7A and 7B show an example step of forming the light blocking layer by use of the coating machine shown in Fig. 6.

First, the needle 62 performs scanning of the upper surface of the lens array body 36. In synchronism with scanning action, the syringe 63 supplies a resin M2 to the needle 62 and applies the resin to a predetermined point on the upper surface of the lens array body 36 (Fig. 7A).

Next, the energy E for curing purpose is applied, as required, to thus cure the resin M2. The light blocking layer 37 is thereby formed over the upper surface of the lens array body 36 (Fig. 7B). In the illustrated example, the light blocking layer 37 provides an exposure of the entirety of the optical surfaces 34 of the respective lens blocks 32 on the upper surface of the lens array body 36 exposed and covers the substrate block 38.

Preferably, an area (a light blocked area) covered with the light blocking layer 37 on the upper surface of the lens array body 36 exhibits higher wettability with respect to the resin M2 than does the other area (a translucent area). The light blocking layer 37 can thereby be formed with superior accuracy. In the foregoing embodiment, the substrate block 38 exhibits higher wettability than does the optical surface 34. Spreading of the wet from the resin M2 to the optical surface 34 is thereby prevented, so that the entirety of the optical surfaces 34 can be exposed without fail. For instance, a technique of making the light blocked area rougher than the translucent area is mentioned as a method for enhancing wettability of the light blocked area.

Coating of the resin M2 used for forming the light blocking layer 37 is not limited to coating action performed by use of the coating machine shown in Fig. 6. Inkjet coating, spraying, or spin coating is also applicable. Even when the coating technique, like spraying and spin coating, does not involve use of a patterning mechanism, a water repellent film is formed in the translucent area on the upper surface of the lens array body 36. A contact angle between the upper surface of the lens array body 36 in the translucent area and the resin M2 is set to 90° or more, thereby making it possible to prevent the resin M2 from remaining in the translucent area. Since the translucent area on the upper surface of the lens array body 36 corresponds to the optical surfaces 34 of the respective lens blocks 32, it is preferable that the water repellent film should be formed as an antireflection coating.

The light blocking layer 37 provides an exposure of the entirety of the optical surfaces 34 of the respective lens blocks 32, covers the substrate block 38, and blocks stray light. In order to block stray light, it is also possible to integrally form, by means of so-called two color molding, the plurality of lens blocks 32 from a translucent resin and integrally form the substrate block 38 from a light blocking resin analogous to that used for forming the light blocking layer 37. Alternatively, it is also possible to integrally form the lens blocks 32 and the substrate block 38 from a translucent resin and expose the substrate block 38 to laser, to thus carbonize a surface layer of the substrate block 38 so as to assume a light blocking characteristic.

The substrate block 38 of the lens array 5 manufactured as mentioned above is cut with a cutter, or the like, to thus be separated into the plurality of lenses 3 that each include the lens block 32. The lens 3 makes up an imaging unit 1 (see Fig. 1) in combination with the sensor 2 as mentioned above.

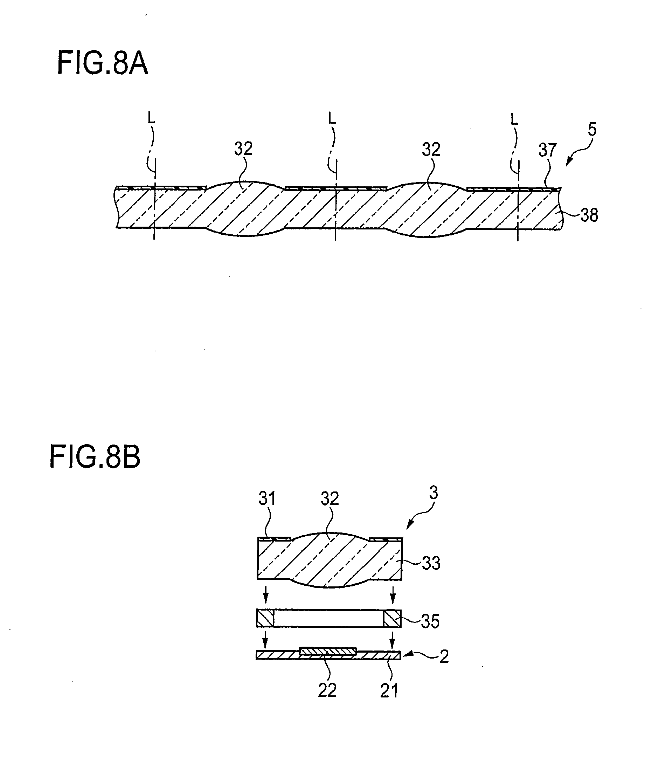

Figs. 8A and 8B show an example method for manufacturing the imaging unit shown in Fig. 1.

The substrate block 38 is first cut along cut lines L extending between a plurality of rows and columns of the lens blocks 32 arranged in a matrix pattern. The lens array 5 is thereby divided into the plurality of lenses 3 that each include one lens block 32 (Fig. 8A).

Each of the lenses 3 is stacked on each of the sensors 2 by way of the spacer 35. The imaging unit 1 is thus produced (Fig. 8B).

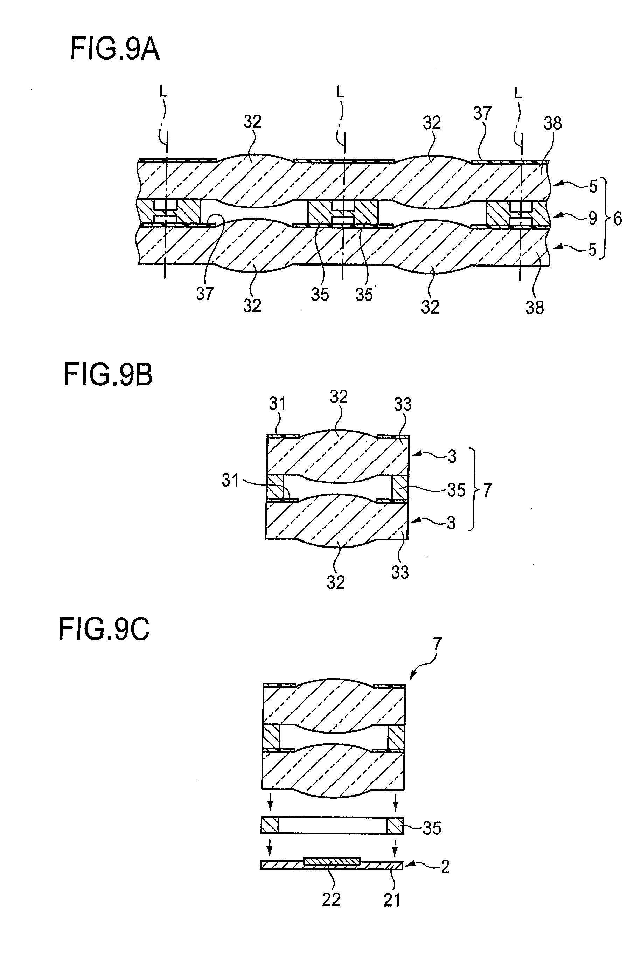

Figs. 9A to 9C show an example modification of the method for manufacturing the imaging unit shown in Figs. 8A and 8B. In the example shown in Figs. 9A to 9C, the two lenses 3 are stacked on each of the sensors 2.

First, the plurality of spacers 35 are arranged in alignment with the plurality of lens blocks 32 arranged in the lens array 5. The two lens arrays 5 are stacked one on top of the other with a spacer array 9 resultant of interconnection of the spacers 35 interposed therebetween, thereby forming a layered lens array 6 (Fig. 9A).

Next, the substrate blocks 38 of the two lens arrays 5 and the spacer array 9 included in the layered lens array 6 are collectively cut along the cut lines L. The layered lens array 6 is thereby separated into a plurality of layered lenses 7 each of which includes the two lenses stacked one on top of the other 3 (Fig. 9B).

Each of the layered lenses 7 is stacked on each of the sensors 2 by way of the spacer 35. The imaging unit 1 is thus produced (Fig. 9C).

As mentioned above, the layered lens 7 into which the plurality of lenses 3 are previously layered is stacked on each of the sensors 2. When compared with a case where the lenses 3 are sequentially stacked on the respective sensors 2, productivity of the imaging unit 1 can be enhanced.

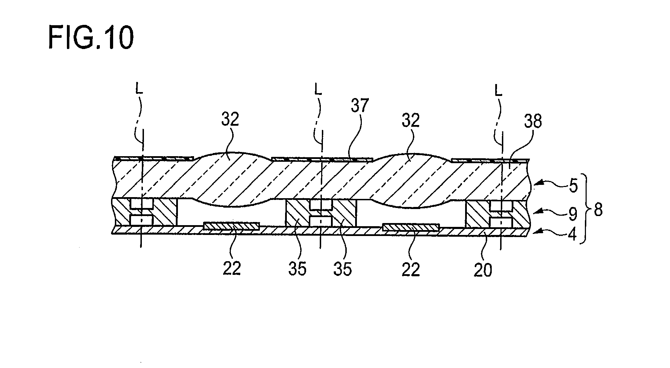

Fig. 10 shows another example method for manufacturing the imaging unit shown in Fig. 1. In the embodiment shown in Fig. 10, the lens array 5 is stacked on the sensor array 4, thereby producing a layered element array 8 that is an aggregation of the plurality of imaging units 1. The layered element array 8 is subsequently divided into the plurality of imaging units 1.

The sensor array 4 has a wafer 20 formed from a semiconductor material, like silicone. A plurality of solid state imaging elements 22 are arranged on the wafer 20 in alignment with the plurality of lens blocks 32 in the lens array 5. Typical diameters of the wafer 20 include 6 inches, 8 inches, and 12 inches. Thousands of solid state imaging elements 22 are arranged.

The lens array 5 is stacked on the sensor array 4 by way of the spacer array 9, thereby producing the layered element array 8. The wafer 20 of the sensor array 4 included in the layered element array 8, the substrate block 38 of the lens array 5, and the spacer array 9 are collectively cut along the cut lines L. The layered element array 8 is thus separated into the plurality of imaging units 1 including the respective lens blocks 32 and the respective solid state imaging elements 22.

As mentioned above, one lens array 5 or more are stacked on the sensor array 4. Subsequently, the wafer 20 of the sensor array 4 and the substrate block 38 of the lens array 5 are collectively cut into the plurality of imaging units 1. When compared with the case where the lenses 3 or the layered lens 7 of the lenses are mounted on the respective sensors 2, productivity of the imaging unit 1 can be enhanced further.

As mentioned above, the present specification provides a lens and a lens array and a manufacturing method thereof as below.
(1) A lens is formed from a heat resistant resin and includes a diaphragm integrally provided on a surface of the lens. The diaphragm is a coating layer formed as a result of a heat resistant, light blocking resin being applied over the surface.
(2) In the lens according to (1), the diaphragm is the coating layer formed as a result of the resin being applied over the surface by means of inkjet coating.
(3) In the lens according to (1), an area of the surface covered with the diaphragm exhibits higher wettability with respect to the resin making up the diaphragm than does a remaining area.
(4) In the lens according to (3), the area of the surface covered with the diaphragm is rougher than is the remaining area.
(5) In the lens according to (3), a water repellent film is formed in an area of the surface other than the area covered with the diaphragm.
(6) In the lens according to (5), the water repellent film is an antireflection coating.
(7) In the lens according to any one of (1) to (6), both a resin used for forming the lens and a resin used for forming the diaphragm are an energy curable resin.
(8) In the lens according to any one of (1) to (6), a glass transition point of the resin used for making the lens and a glass transition point of the resin used for making the diaphragm are 250°C or more.
(9) In the lens according to any one of (1) to (6), a difference between a coefficient of linear expansion of the resin used for making the lens and a coefficient of linear expansion of the resin used for making the diaphragm is 1 x 10⁻⁵/°C or less.
(10) In the lens according to (9), the resin used for making the diaphragm is resultant from dispersing a black pigment into the resin used for making the lens.
(11) A lens array includes the plurality of lenses defined in any one of (1) to (10). The plurality of lenses are arranged in a one-dimensional or two-dimensional pattern and interconnected.
(12) A method for manufacturing a lens array includes: forming a lens array from a heat resistant resin, the lens array including a plurality of lenses arranged in a one-dimensional or two-dimensional pattern and a substrate block connecting the plurality of lenses together; and coating a surface of the lens array with a heat resistant, light blocking resin, thereby forming a light blocking layer that provides an exposure of at least portions of the respective lenses.
(13) A method for manufacturing a lens includes: cutting the substrate block of the manufactured lens array according to (12), to separate the lens array into respective lenses.

## Claims

1. A lens that is formed from a heat resistant resin and that includes a diaphragm integrally provided on a surface of the lens, wherein
the diaphragm is a coating layer formed as a result of a heat resistant, light blocking resin being applied over the surface.

2. The lens according to claim 1,
wherein the diaphragm is the coating layer formed as a result of the resin being applied over the surface by means of inkjet coating.

3. The lens according to claim 1,
wherein an area of the surface covered with the diaphragm exhibits higher wettability with respect to the resin making up the diaphragm than does a remaining area.

4. The lens according to claim 3,
wherein the area of the surface covered with the diaphragm is rougher than is the remaining area.

5. The lens according to claim 3,
wherein a water repellent film is formed in an area of the surface other than the area covered with the diaphragm.

6. The lens according to claim 5,
wherein the water repellent film is an antireflection coating.

7. The lens according to any one of claims 1 to 6,
wherein both a resin used for forming the lens and a resin used for forming the diaphragm are an energy curable resin.

8. The lens according to any one of claims 1 to 6,
wherein a glass transition point of the resin used for making the lens and a glass transition point of the resin used for making the diaphragm are 250°C or more.

9. The lens according to any one of claims 1 to 6,
wherein a difference between a coefficient of linear expansion of the resin used for making the lens and a coefficient of linear expansion of the resin used for making the diaphragm is 1 x 10⁻⁵/°C or less.

10. The lens according to claim 9,
wherein the resin used for making the diaphragm is resultant from dispersing a black pigment into the resin used for making the lens.

11. A lens array including the plurality of lenses defined in any one of claims 1 to 10, wherein the plurality of lenses are arranged in a one-dimensional or two-dimensional pattern and interconnected.

12. A method for manufacturing a lens array comprising:
forming a lens array from a heat resistant resin, the lens array including a plurality of lenses arranged in a one-dimensional or two-dimensional pattern and a substrate block connecting the plurality of lenses together; and
coating a surface of the lens array with a heat resistant, light blocking resin, thereby forming a light blocking layer that provides an exposure of at least portions of the respective lenses.

13. A method for manufacturing a lens comprising:
cutting the substrate block of the manufactured lens array according to the method of claim 12, to separate the lens array into respective lenses.
